**Europäisches Patentamt**

(19) **European Patent Office**

**Office européen des brevets**

(11) Publication number : **0 296 190 B1**

(12) # EUROPEAN PATENT SPECIFICATION

(45) Date of publication of patent specification :
**17.06.92 Bulletin 92/25**

(51) Int. Cl.⁵ : **H04N 7/087**

(21) Application number : **88900029.5**

(22) Date of filing : **07.12.87**

(86) International application number :
**PCT/GB87/00884**

(87) International publication number :
**WO 88/04507 16.06.88 Gazette 88/13**

(54) **PROGRAMMING OF TELEVISION RECEIVING DEVICES.**

(30) Priority : **08.12.86 GB 8629291**

(43) Date of publication of application :
**28.12.88 Bulletin 88/52**

(45) Publication of the grant of the patent :
**17.06.92 Bulletin 92/25**

(84) Designated Contracting States :
**DE FR NL**

(56) References cited :
**EP-A- 0 037 077**
**EP-A- 0 128 093**
**DE-A- 3 335 082**
**GB-A- 2 146 878**
**US-A- 4 290 062**

(56) References cited :
**Rundfunktechnische Mitteilungen, vol. 29, no.**
**4, July/August 1985, A.Heller: "VPS - Ein**
**neues System zur beitragsgesteuertenProg-**
**rammaufzeichnung" pages 161-169.**
**Funktechnink, vol. 41, no. 6, June 1986,**
**(Heidelberg, DE) C.L.M.:**
**"Videorecorder-Programmieren mit VPV",**
**pages 249-251.**

(73) Proprietor : **BRITISH BROADCASTING**
**CORPORATION**
**Broadcasting House**
**London W1A 1AA (GB)**

(72) Inventor : **CHAMBERS, John, Philip 24 Green**
**Lane**
**Tadworth**
**Surrey KT20 6TL (GB)**

(74) Representative : **Pears, David Ashley et al**
**REDDIE & GROSE 16 Theobalds Road**
**London WC1X 8PL (GB)**

EP 0 296 190 B1

## Description

This invention relates to the automatic programming of broadcast receiving devices, referred to herein as VPS (video programming system). Methods for labelling individual broadcast television and radio programmes by means of auxiliary data carried by, for example, teletext or RDS (Radio Data System) are already established. Video recorders are being produced which can be pre-programme to receive and record the desired programmes even when they are not broadcast at the scheduled time; these operate under control of this auxiliary data which serves to identify the required programme. Similar techniques can be used to pre-programe television, radio and teletext receivers to deliver selected programmes as they are broadcast, and to operate audio or data recorders to store such programmes.

In one implementation, namely the German VPS, video recorders are programmed using programme labels which are published alongside the programme listings in newspapers and magazines. It has been proposed that such data be entered by reading bar codes with a light pen. It has also been proposed that a teletext page, broadcast as part of the service, be used as part of the automated programming process. In one proposed system a teletext page containing the listing of the programmes also contains concealed additional information against some or all the entries, each set of information being identified by a visible symbol against that item in the list. A suitably-equipped receiver has a 'cursor' which, under user control, can be made to identify a particular symbol. If that item is selected by the user, logic within the receiver can gain access to the appropriate concealed programme labelling data, which is in fixed relationship to its corresponding symbol, e.g. the next five (concealed) characters along the text row, and it then enters this pre-programming instruction.

One example of a system, in which a teletext page is used to display listings of user selectable programmes, is described in DE-A-3335082 (Henze). In the Henze system a first control is provided for moving a cursor to identify a particular listed programme on the teletext page and a second control is provided for initiating storage of labelling data for the identified programme.

The systems as described above are inconvenient for the teletext editor as certain fixed parts of the page area must be reserved for the labelling information which is required.

It is already known that undisplayed data may be sent in teletext rows numbered above the twenty five displayable rows 0 to 24. The row address is six bits, allowing further "ghost" rows 25 to 31 to be transmitted and it is known to use rows 26, 27 and 28 to transit data associated with the current page, whereas row 29 is used for magazine-related data and rows 30 and 31 for unrelated data. The ghost rows do not provide sufficient capacity for the amount of additional information which it is desirable to send, particularly having regard to the existing demands on rows 26-28 for information such as cursor positions (explained below).

It is now proposed that the necessary programme label information be stored on a related teletext 'page' which can be accessed by the receiver but which never need be displayed, indeed it may be made undisplayable. Techniques for identifying a related page are known (see, for example, our U.K. Patent 2 062 424 or GB-A-2146878 of Philips). When the viewer indicates that the programming function is required, the decoder circuitry, without necessarily altering the displayed page, can select and store a particular linked page. A modem receiver equipped with multiple page stores may already have this linked page waiting in storage. The linked page will contain all the labels relating to the entries on the displayed page, either packed together in predetermined sequence, in the interests of minimising data transmission time and storage capacity, or set out within the linked page in positions corresponding to the entries on the displayed page.

When the user selects a particular entry, by reference to its particular adjoining symbol or possibly by moving the cursor to any point within the displayed entry, the receiver extracts the corresponding labelling information from the linked page. The receiver logic can be arranged to indicate on the displayed page which item has actually been selected using additional information stored on the linked page in order to give confirmation of the user's instruction.

The invention thus provides a broadcast teletext receiver with user operable means for selection of one of a plurality of displayed items on a first teletext page and means responsive to such selection to extract programme labelling information corresponding to the selected item from another teletext page identified as a linked page in the first page.

The receiver may identify the labelling information as the $n^{th}$ such information in the linked page, where the selected displayed item is the identified as $n^{th}$ of the displayed items in the first page. The way in which the items are numbered for this purpose is immaterial. It may be the order in which the items occur down the page for example or the order in which cursor positions for the items are listed, in a manner explained below.

Alternatively the receiver may identify the labelling information as that occurring in the same position in the linked page as the selected displayed item occupies in the first page.

The invention also provides a method of broadcasting labelling information wherein a first teletext page is transmitted with a plurality of messages appearing as separate items on the displayed page and with information identifying a linked page and programme labelling information corresponding to each message is transmitted in the linked page.

In this method, the linked page may be rendered undisplayable.

The invention further provides a method for receiving broadcast television programmes, wherein a first teletext page is displayed, the first teletext page including plurality of messages each representing a programme listing, and also including information identifying another teletext page as a linked page, which linked page is not displayed and includes programme labelling information corresponding to each of the programme listings displayed on the first page, such that, in response to user selection of one of the programme listings displayed on the first page, the corresponding programme labelling information is extracted from the linked page.

The invention will be described in more detail, by way of example, with reference to the accompanying drawings, in which:-

Fig. 1 is a block diagram of an embodiment of the invention;

Fig. 2 shows a programme information page;

Fig. 3 shows the format of a pointer message; and

Fig. 4 shows the format of a pseudo page.

At a transmitter station, a transmitter 10 combines the broadcast television signal with the teletext data which is transmitted in well known manner on certain television lines in the field blanking interval and includes auxiliary VPS data, whose format will be explained below. The composite signal is transmitted on a broadcast medium and, at a receiver, a conventional teletext decoder 12 extracts the teletext data, which is fed to a controller 14, from the selected channel and passes the video signal for this channel to a video tape recorder 16. The off-air or played-back video signal is fed to the receiver display 18 acting in particular as a teletext page display. The handling of the picture signal forms no part of the present invention, is conventional and will not be further described.

Channel selection and also programming selections are made on a keyboard 20 which is typically a remote control unit communicating on one of several well known ways with the controller 14. A barcode reader 22 can be provided as an optional means of entering programming information.

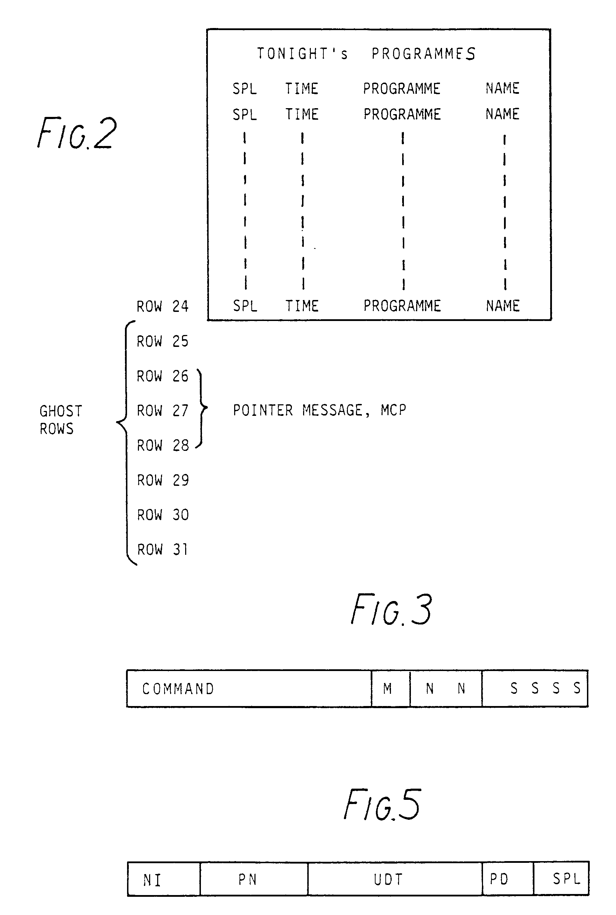

The controller 14 is associated with a multi-page memory 24 for storing the currently displayed teletext page and associated pages. A programme information page may have a format such as that shown in Fig. 2 where each displayed text row consists of a shortened programme label (SPL), a schedule time and a programme name. The SPLs may be four decimal digit numbers assigned each week by the broadcaster to give the user a means of identifying a programme. The controller requires more information than is contained in such single codes to be able to control the recorder correctly on the basis of the auxillary VPS data.

The VPS data accompanying a broadcast programme is a unique programme label (UPL) of say 36 or 40 bits repeated at suitable intervals and with such error checking/correcting strategies as are required. There are various possible carriers for this VPS data, including teletext ghost rows 30 and 31, and a digital stereo sound channel such as the recently defined NICAM-728 system for television sound.

The precise format of the VPS data is not important to the present Invention but the following components may be included:

NI      Network identifier
PN      Programme number
UDT     Unified date and time (current)
PD      Programme duration
ET      Elapsed time (of current programme)
SPL     Shortened programme label.

NI and PN together constitute the UPL. UDT will be explained in more detail below.

In order uniquely to specify when an event occurs, and to allow a controller to arrange a series of events, from whatever source, in order of occurrence a simple increasing seconds count is needed. This should be the same at any instant throughout the world and it should be free from the discontinuities and ambiguities associated with changes of time zone and daylight-saving time.

Such a system for recording date and time information is already the subject of international standardisation in the CCIR. Time is expressed in hours, minutes and seconds using Coordinated Universal Time (UTC), which is based on counting seconds from an atomic clock and which is kept within 0.9s of Greenwich Mean Time by the occasional insertion of a 61st second in the last minute of the half-year. Date is expressed as the Modified Julan Date (MJD) which is a five-digit decimal day count incremented at UTC midnight. The origin of the count (day 0) was 1858 November 17 and 1987 July 24 was MJD 47 000.

Note that the combination of MJD and UTC is ideally suited to calculating the time difference between events or to putting events in order of occurrence. Moreover, it is independent of calendar convention and so equally applicable in countries where the Greporlan calendar is not used.

The combination of UTC and MJD is already used in the UK teletext system and in the VHF/FM radiodata system (RDS) to carry time and date in machine readable form. In applications where a display of local time and date is required, or where information is to be entered manually or automatically using local time, the conversion to and from UDT can be made by adding or subtracting a "local offset" in the range -11 to +14 hours. This local offset can be stored in the decoder in non-volatile memory and amended by the user to account for daylight-saving time charges. Alternatively the decoder can be programmed to adopt and follow the local offset broadcast by a particular network of the user's choice.

Unified date and time is used in two ways in a video programming decoder. It is used in the system clock which governs the whole process, and which can be corrected or restarted using broadcast UDT transmissions (which are, of course, the same from any source at any given instant). It is also used to indicate the expected time of transmission of a particular programme.

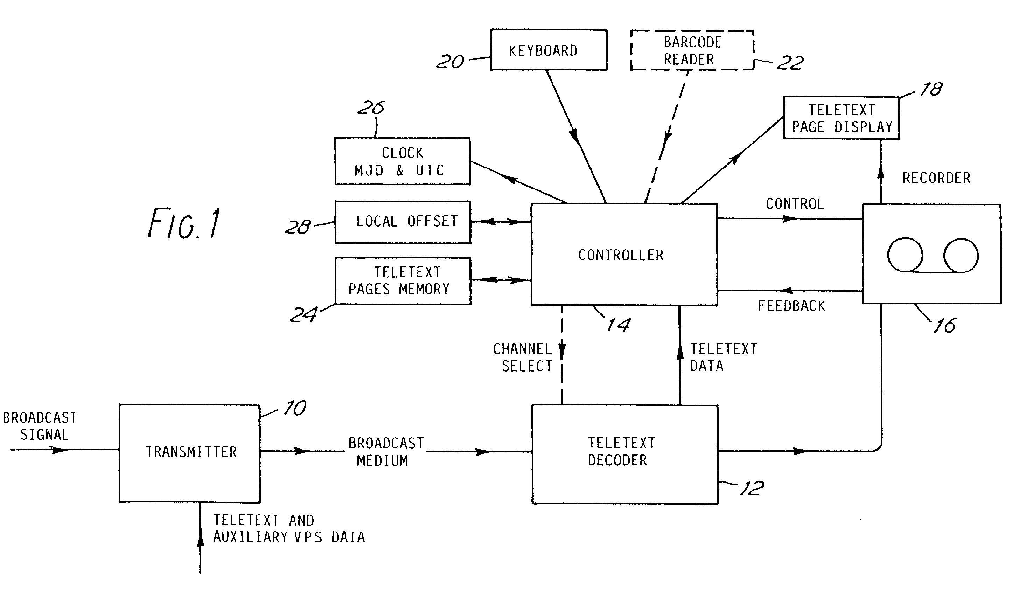

The system of Fig.1 is thus shown with a clock 26 for keeping track of MJD and UTC and a register 28 for storing the local offset.

To enable the controller 14 to be programmed to record programmes identified by UPL, as distinct from pure time programming, it must be possible to supply the controller with a selection word which contains at least the UPL and preferably also the UDT for the scheduled programme time, the PD and SPL and also MCP (menu cursor position - explained below). This represents well over 100 bits per programme item on a programme information page, which may carry as many as 20 programme items. The amount of data required cannot be accommodated in the teletext page itself, either as concealed data in rows 0 to 24 or as data in the ghost rows 2628. These ghost rows are however used to carry firstly a pointer message and secondly MCP. The format of the pointer message is shown in fig.3. It comprises a command word plus parameters M (magazine number), NN (page number) and SSSS (sub-code) and, when detected by the controller 14, causes the controller to load the pseudo-page identified by MNNSSSS into the memory 24.

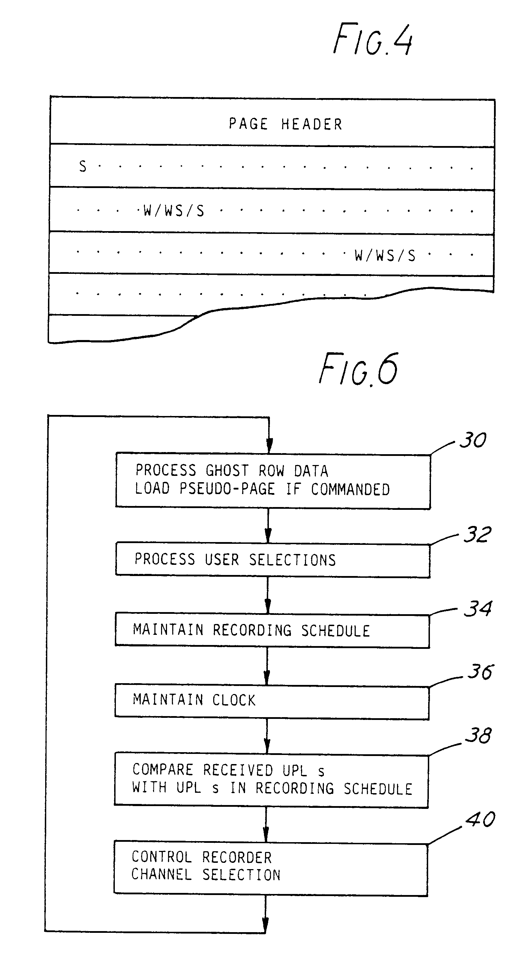

One possible format for the pseudo-page is shown in fig.4, consisting of selection words S......W separated by word separators WS, which allow variable length selection words. All 31 non-header lines of the page can be used. Another possibility would be fixed length selection words, in which case word separators would not be required. Fig.5 shows the format of one selection word, comprising NI, PN, UDT, PD and SPL.

The hardware of the controller 14 will not be described since it is based essentially on a dedicated or suitably programmed general purpose microprocessor interfaced to the required input and output ports. Fig.6 shows the main functions implemented by the microprocessor, excluding handling of pure manual control of the system. These functions are handled in a manner well known per se in microprocessor systems, using interrupt and/or time scheduling techniques to allocate processor time to all functions.

In block 30 ghost row data is processed. This may involve functions quite separate from those required by the present invention. So far as the present Invention is concerned, such processing consists in recognising any pointer message command and then loading the identified pseudo page. The MCP date is used as described below.

In block 32 any user selections made via the keyboard 20 are processed. The selection technique itself is described below but the principle is very simple. If the programmes on the programme information page (Fig.2) are numbered 1, 2, 3 etc., (whether in the order in which they appear on the page or not), the user selection of the $n^{th}$ programme causes the $n^{th}$ selection word (Fig.4) from the associated pseudo-page to be added to the recording schedule.

The recording schedule is an ordered list of the user selections maintained (block 34) by an algorithm which can be made as simple or sophisticated as desired. For example, it may be arranged to warn the user that a selection which has just been made will overwrite a simultaneous existing selection on another channel, that an overlap of selected programs will occur if schedules are maintained or an overlap will occur if schedules get out of step by such and such an amount.

Block 36 simply maintains the clock 26 and may also be assumed to handle adjustments to the offset stored in the register 28.

Block 38 compares received UPL's with UPL's in the recording schedule. In order that the system may know what programmes are coming in, the system is set up so that all transmitters carry all UPLs for all channels receivable in their locality. When a received UPL matches a stored UPL in the reading schedule, the appropriate decisions are taken and commands are issued (block 40) to effect channel selection and to turn the recorder on and off. Again, algorithms can be built into block 38 to resolve actual conflicts. For example, a recording currently being recorded may always be given precedence over another selected programme which comes on before the first recording is finished. As each selected program is recorded it is removed from the recording schedule.

The operations in blocks 32 and 34 will now be considered in more detail. Three possibilities exist. In the first place the keyboard can be used to enter information. It would be unrealistic to expect the user to enter complete UPL's but the user could enter SPL's (four digits) and the microprocessor can then search the pseudo-page (Fig.4) to find the SW containing the SPL which has been entered. The SW thus found is passed to block 34 for adding to the recording schedule.

In the second place, a process of menu selection, known per se, can be used, as in German VPS. The cursor (e.g. a highlight bar) is stepped from item to item and the user merely presses an "enter" key (or a "delete" key if correcting an erroneous entry) when the cursor is on a desired item. The MCP data in the ghost lines of the programme information page identify the X,Y coordinate pairs of all cursor positions in turn to enable the cursor to be stepped correctly (e.g. skipping the second line of a two-line entry). This technique is known per se.

The cursor stepping can be automatic (e.g. one step per second) or commanded by a user "step" key.

The third possibility is to use the barcode reader 22. This could enter UPLs directly, without reliance on the invention or could enter SPLs to be processed in the same way as those entered on the keyboard.

## Claims

1. A broadcast teletext receiver comprising user operable means (20, 22) for selection of one of a plurality of displayed items on a first teletext page, characterised by means (14, 24) responsive to such selection to extract programme labelling information corresponding to the selected item from another teletext page identified as a linked page in the first page.

2. A receiver according to claim 1, characterised in that the receiver identifies the labelling information as the $n^{th}$ such information in the linked page, where the selected displayed item is identified as the $n^{th}$ of the displayed items in the first page.

3. A receiver according to claim 1, characterised in that the receiver identifies the labelling information as that occuring in the same position in the linked page as the selected displayed item occupies in the first page.

4. A receiver according to claim 1, 2 or 3, characterised by means (14, 24) responsive to selection of an item to extract the corresponding programme labelling information and to add this extracted information to a stored list of user selections.

5. A receiver according to claim 4, characterised by means (14) for comparing labelling information accompanying received programmes with the programme labelling information in the stored list and, when a match occurs, operative to provide a switching signal for enabling the selected item to be recorded.

6. A receiver according to any of claims 1 to 5, characterised in that the user operable selection means (20, 22) comprise means (20) for entering a short code in a displayed item and in that the extraction means (14, 24) are responsive to the entered code to extract the programme labelling information corresponding thereto.

7. A receiver according to any of claims 1 to 5, characterised in that the user operable selection means (20, 22) comprise means (20) for stepping a cursor from displayed item to displayed item and an entry key whose operation selects the item currently identified by the cursor.

8. A method of broadcasting programme labelling information wherein a first teletext page is transmitted with a plurality of messages appearing as separate items on the displayed page and with information identifying a linked page, characterised in that programme labelling information corresponding to each message is transmitted in the linked page.

9. A method according to claim 8, characterised in that the identifying information is included in a nondisplayable teletext line of the first page.

10. A method according to claim 8 or 9, characterised in that each programme labelling information includes a unique programme label.

11. A method according to claim 10, characterised in that each programme labelling information further includes data identifying the scheduled date and time of transmission of the programme.

12. A method according to claim 10 or 11, characterised in that each programme labelling information further includes data indicating the duration of the programme.

13. A method according to claims 10, 11 or 12, characterised in that each programme labelling information further includes a short code identifying the programme within a time span consisting of a plurality of days only.

14. A method according to claims 10, 11, 12 or 13, characterised in that each programme labelling information further includes data identifying the network on which the programme is to be transmitted.

15. A method according to any of claims 8 to 14, characterised in that the linked page includes teletext codes rendering the page undisplayable.

16. A method for receiving broadcast television programmes, wherein a first teletext page is displayed, the first teletext page including a plurality of messaes each representing a programme listing, and also including information identifying another teletext page as a linked page, characterised in that the linked page is not displayed and includes programme labelling information corresponding to each of the programme listings displayed on the first page, such that, in response to user selection of one of the programme listings displayed on the first page, the corresponding programme labelling information is extracted from the linked page.

## Patentansprüche

1. Teletextsendungs-Empfänger, aufweisend eine benutzerbedienbare Einrichtung (20, 22) zur Selektion einer mehrerer auf einer ersten Teletextseite dargestellter Eintragungen, **gekennzeichnet durch** Einrichtungen (14, 24), die auf eine derartige Selektion ansprechen, um Programmkennzeichnungsinformation, die der selektrierten Eintragung entspricht, von einer anderen Teletextseite zu extrahieren, die in der ersten Seite als eine verbundene Seite identifiziert ist,

2. Empfänger nach Anspruch 1, **dadurch gekennzeichnet** , daß der Empfänger die Kennzeichnungsinformation als die n-te derartige Information in der verbundenen Seite identifiziert , wo die selektierte dargestellte Eintragung als die n-te der dargestellten Eintragungen in der ersten Seite identifiziert ist.

3. Empfänger nach Anspruch 1, **dadurch gekennzeichnet** , daß der Empfänger die Kennzeichnungsinformation als die identifiziert, die an der gleichen Stelle in der verbundenen Seite wie sie die selektierte dargestellte Eintragun in der ersten Seite belegt, auftritt.

4. Empfänger nach Anspruch 1, 2 oder 3, **gekennzeichnet durch** Einrichtungen (14, 24), die auf die Selektion einer Eintragung ansprechen, um die entsprechende Programmkennzeichnungsinformation zu extrahieren und diese extrahierte Information einer gespeicherten Liste von Benutzerselektionen hinzuzufügen.

5. Empfänger nach Anspruch 4, **gekennzeichnet durch** eine Einrichtung (14) zum Vergleichen von Kennzeichnungsinformation, die die empfangenen Programme begleitet, mit der Programmkennzeichnungsinformation in der gespeicherten Liste, und die, wenn eine Übereinstimmung auftritt, so wirksam ist daß sie ein Schaltsignal vorsieht, das die Aufzeichnung der selektierten Eintragung ermöglicht.

6. Empfänger nach einem der Ansprüche 1 bis 5, **dadurch gekennzeichnet** , daß die benutzerbedienbare Selektionseinrichtung (20, 22) Einrichtungen (20) aufweist, die einen kurzen Code in einer dargestellten Eintragung einbringen, und daß die Extraktionseinrichtungen (14, 24) auf den eingebrachten Code ansprechen, um die hierzu entsprechende Programmkennzeichnungsinformation zu extrahieren.

7. Empfänger nach einem der Ansprüche 1 bis 5, **dadurch gekennzeichnet** , daß die benutzerbedienbare Selektionseinrichtung (20, 22) Einrichtungen (20) umfaßt, die einen Positionsanzeiger von dargestellter Eintragung zu dargestellter Eintragung vorrücken, und eine Eingabetaste umfaßt, deren Betätigung die gerade durch den Positionsanzeiger identifizierte Eintragung selektiert.

8. Verfahren zum Senden von Programmkennzeichnungsinformation, in welchem eine erste Teletextseite mit mehreren als separate Eintragungen auf der dargestellten Seite erscheinenden Nachrichten und mit Information, die eine verbundene Seite identifiziert, übertragen wird, **dadurch gekennzeichnet** , daß Programmkennzeichnungsinformation, die jeder Nachricht entspricht, in der verbundenen Seite übertragen wird.

9. Verfahren nach Anspruch 8, **dadurch gekennzeichnet** , daß die Identifikationsinformation in einer nicht darstellbaren Teletextzeile der ersten Seite enthalten ist.

10. Verfahren nach Anspruch 8 oder 9, **dadurch gekennzeichnet**, daß jede Programmennzeichungsinformation eine eindeutige Programmkennzeichnung enthält.

11. Verfahren nach Anspruch 10, , **dadurch gekennzeichnet** , daß jede Programmkennzeichnungsinformation ferner Daten umfaßt, die das programmäßige Datum und Übertragungszeit des Programms identifizieren.

12. Verfahren nach Anspruch 10 oder 11, **dadurch gekennzeichnet** , daß jede Programmkennzeichnungsinformation ferner Daten umfaßt, die die Dauer des Programms anzeigen.

13. Verfahren nach Anspruch 10, 11 oder 12, **dadurch gekennzeichnet** , daß jede Programmkennzeichnungsinformation ferner einen kurzen Code umfaßt, der das Programm innerhalb einer Zeitspanne identifiziert, die nur aus mehreren Tagen besteht.

14. Verfahren nach Anspruch 10, 11, 12 oder 13, **dadurch gekennzeichnet** , daß jede Programmkennzeichnunbsinformation ferner Daten umfaßt, die das Netzwerk identifizieren, auf dem das Programm zu übertragen ist.

15. Verfahren nach einem der Ansprüche 8 bis 14, **dadurch gekennzeichnet** , daß die verbundene Seite Teletextcodes umfaßt, die die Seite nicht darstellbar machen.

16. Verfahren zum Empfangen von Fernsehprogrammsendungen, in welchem eine erste Teletextseite dargestellt wird, wobei die erste Teletextseite mehrere Nachrichten umfaßt, von denen jede eine Programmauflistung repräsentiert, und auch Information umfaßt, die eine weitere Teletextseite als eine verbundene Seite identifiziert, **dadurch gekennzeichnet** , daß die verbundene Seite nicht dargestellt wird und Programmkennzeichnungsinformation enthält, die jeder der Programmauflistungen, welche auf der ersten. Seite dargestellt werden, entspricht, derart, daß ansprechend auf die Benutzerselektion von einer der Programmauflistungen, die auf der ersten Seite dargestellt werden, die entsprechende Programmkennzeichnungsinformation von der verbundenen Seite extrahiert wird.

**Revendications**

1. Un récepteur de télétexte diffusé comprenant des moyens (20, 22) pouvant être mis en oeuvre par l'utilisateur pour choisir un élément parmi plusieurs éléments affichés sur une première page de télétexte, caractérisé par des moyens (14, 24) sensibles à ce choix pour extraire une information d'étiquetage de programme correspondant à l'élément choisi dans une autre page de télétexte identifiée dans la première page comme une page liée.

2. Un récepteur selon la revendication 1, caractérisé en ce que le récepteur identifie l'information d'étiquetage comme la n-ième de ces informations dans la page liée, où l'élément affiché choisi est identifié comme le n-ième des éléments affichés de la première page.

3. Récepteur selon la revendication 1, caractérisé en ce que le récepteur identifie l'information d'étiquetage comme celle qui apparaît, dans la page liée, dans la même position que la position occupée dans la première page par l'élément affiché choisi.

4. Un récepteur selon la revendication 1, 2 ou 3, caractérisé par des moyens (14, 24) sensibles au choix d'un élément pour extraire l'information correspondante d'étiquetage de programme et pour additionner cette information extraite à une liste mémorisée de choix d'utilisateurs.

5. Un récepteur selon la revendication 4, caractérisé par des moyens (14) pour comparer une information d'étiquetage qui accompagne des programmes reçus à l'information d'étiquetage de programme de la liste mémorisée et, lorsqu'un accord se produit, pour agir afin de fournir un signal de commutation pour valider l'élément choisi à enregistrer.

6. Un récepteur selon l'une quelconque des revendications 1 à 5, caractérisé en ce que les moyens de choix (20, 22) qui peuvent être mis en oeuvre par l'utilisateur comprenant des moyens (20) pour entrer un court code dans un élément affiché et en ce que les moyens d'extraction (14, 24) sont sensibles au code entré pour extraire l'information d'étiquetage de programme qui lui correspond.

7. Un récepteur selon l'une quelconque des revendication 1 à 5, caractérisé en ce que les moyens de choix (20, 22) pouvant être mis en oeuvre par l'utilisateur comprennent des moyens (20) pour avancer pas-à-pas un curseur d'un élément affiché à un autre et une touche d'entrée dont la mise en oeuvre choisit l'élément actuellement identifié par le curseur.

8. Un procédé de diffusion d'une information d'étiquetage de programme dans lequel est transmise une première page de télétexte comprenant plusieurs messages, apparaisssant comme des éléments séparés sur la page affichée, et comprenant une information identifiant une page liée, caractérisé en ce que l'information d'étiquetage de programme correspondant à chaque message est transmise dans la page liée.

9. Un procédé selon la revendication 8, caractérisé en ce que l'information d'identification est incluse dans une ligne de la première page du tététexte qui ne peut être affichée.

10. Un procédé selon la revendication 8 ou 9, caractérisé en ce que chaque information d'étiquetage de programme comprend une étiquette unique de programme.

11. Un procédé selon la revendication 10, caractérisé en ce que chaque information d'étiquetage de programme comprend en outre une donnée identifiant la date et l'heure de transmission prévues pour le programme.

12. Un procédé selon la revendication 10 ou 11, caractérisé en ce que chaque information d'étiquetage de programme comprend en outre une donnée indiquant la durée du programme.

13. Un procédé selon la revendication 10, 11 ou 12, caractérisé en ce que chaque information d'étiquetage de programme comprend en outre un court code identifiant le programme à l'intérieur d'une plage de temps constituée de plusieurs jours seulement.

14. Un procédé selon les revendications 10, 11, 12 ou 13, caractérisé en ce que chaque information d'étiquetage de programme comprend en outre une donnée identifiant le réseau sur lequel le programme doit être transmis.

15. Un procédé selon l'une quelconque des revendications 8 à 14, caractérisé en ce que la page liée comprend des codes de télétexte qui rendent la page impossible à afficher.

16. Un procédé destiné à recevoir des programmes de télévision diffusés, dans lequel est affichée une première page de télétexte, la première page de télétexte comprenant plusieurs messages représentant chacun une liste de programmes et comprenant aussi une information identifiant une autre page de télétexte entant que page liée, caractérisé en ce que la page liée n'est pas affichée et comprend une information d'étiquetage de programmes correspondant à chacune des listes de programmes affichées sur la première page d'une manière telle que, en réponse à un choix par l'utilsateur de l'une des listes de programmes affichées sur la première page, l'information correspondante d'étiquetage de programme est extraite de la page liée.

FIG.1

EP 0 296 190 B1

*FIG.2*

```
┌─────────────────────────────────────────────┐
│         TONIGHT's  PROGRAMMES                 │
│                                               │
│   SPL   TIME    PROGRAMME     NAME            │
│   SPL   TIME    PROGRAMME     NAME            │
│    ¦     ¦         ¦            ¦             │
│    ¦     ¦         ¦            ¦             │
│    ¦     ¦         ¦            ¦             │
│    ¦     ¦         ¦            ¦             │
│    ¦     ¦         ¦            ¦             │
│    ¦     ¦         ¦            ¦             │
│    ¦     ¦         ¦            ¦             │
│    ¦     ¦         ¦            ¦             │
│   SPL   TIME    PROGRAMME     NAME            │
└─────────────────────────────────────────────┘
```

ROW 24

ROW 25

ROW 26 ⎫

GHOST    ROW 27 ⎬   POINTER MESSAGE, MCP

ROWS    ROW 28 ⎭

ROW 29

ROW 30

ROW 31

*FIG.3*

| COMMAND | M | N  N | S  S  S  S |
|---|---|---|---|

*FIG.5*

| NI | PN | UDT | PD | SPL |
|---|---|---|---|---|

# FIG.4

| PAGE HEADER |
|---|
| S · · · · · · · · · · · · · · · · · · |
| · · · ·W/WS/S · · · · · · · · · · · |
| · · · · · · · · · · · · · ·W/WS/S · · · |
| · · · · · · · · · · · · · |

# FIG.6

```
┌──────────────────────────────────────┐
│                                        │
│   ┌──────────────────────────────┐ ─30 │
│   │ PROCESS GHOST ROW DATA       │    │
│   │ LOAD PSEUDO-PAGE IF COMMANDED │    │
│   └──────────────────────────────┘    │
│                  │                     │
│   ┌──────────────────────────────┐ ─32 │
│   │ PROCESS USER SELECTIONS      │    │
│   └──────────────────────────────┘    │
│                  │                     │
│   ┌──────────────────────────────┐ ─34 │
│   │ MAINTAIN RECORDING SCHEDULE  │    │
│   └──────────────────────────────┘    │
│                  │                     │
│   ┌──────────────────────────────┐ ─36 │
│   │ MAINTAIN CLOCK               │    │
│   └──────────────────────────────┘    │
│                  │                     │
│   ┌──────────────────────────────┐ ─38 │
│   │ COMPARE RECEIVED UPL s       │    │
│   │ WITH UPL s IN RECORDING SCHEDULE │ │
│   └──────────────────────────────┘    │
│                  │                     │
│   ┌──────────────────────────────┐ ─40 │
│   │ CONTROL RECORDER             │    │
│   │ CHANNEL SELECTION            │    │
│   └──────────────────────────────┘    │
│                  │                     │
└──────────────────────────────────────┘
```